# EUROPEAN PATENT SPECIFICATION

(11) **EP 4 666 033 B1**
(45) Date of publication and mention of the grant of the patent: **04.11.2026**
(21) Application number: 24704839.0
(22) Date of filing: 16.02.2024
(51) Int. Cl.: G01C 21/20, G02B 27/00, G06F 3/01, G02B 27/01

(54) **A METHOD AND SYSTEM FOR FACILITATING THE COORDINATION OF ENTITIES IN A VOLUME**
VERFAHREN UND SYSTEM ZUR ERLEICHTERUNG DER KOORDINATION VON ENTITÄTEN IN EINEM VOLUMEN
PROCÉDÉ ET SYSTÈME FACILITANT LA COORDINATION D'ENTITÉS DANS UN VOLUME

(30) Priority: 16.02.2023 NL 2034170
(43) Date of publication of application: 24.12.2025
(73) Proprietor: Thales Nederland B.V., 7554 RR Hengelo (NL)
(72) Inventor: VAN DER WEL, Jeroen, 7550 GD Hengelo OV (NL)
(74) Representative: Atout PI Laplace
(86) International application number: PCT/EP2024/053943
(87) International publication number: WO 2024/170719

(56) References cited:
- US-A1- 2021 206 459
- US-A1- 2022 326 018
- MR P C VAN KLUIJVEN: "Augmented reality used in navigation. Project 2 Theme: improvement and innovation Content", 5 February 2013 (2013-02-05), XP055199404, Retrieved from the Internet <URL:http://www.maritimesymposium-rotterdam.nl/uploads/Route/Augmented%20Reality%20On%20The%20Bridge.pdf> [retrieved on 20150701]

## Description

### FIELD OF THE INVENTION

The present invention relates to the representation of spatial data for the coordination of entities in a volume, for example to support the maneuvering or operational use of naval vessels including submarines with respect to their environment.

### BACKGROUND PRIOR ART

From the inception of the earliest technologies, humans have coordinated the movement of boats, and the like on the basis of sensorial observation regarding the entities' surroundings, and an intellectual appreciation of the overall status of the entity. While technologies have evolved, this basic approach remains broadly unchanged. For example a Ship's pilot driver still performs a docking maneuver by looking through the windows of the vessel, and interacting with the vessel controls on the basis of his observations filtered through a mental model of the vessel's dimensions, handling properties and the like.

More recent developments in the information technology field provide means to further enrich an operator's understanding of his environment and the entity status. For example, video display screens and head-up displays may provide additional data, and even real time video displays of viewpoints not achievable through a vessel's windows for example. Documents US 2022/326018 A1 and US 2021/206459 A1 disclose augmented reality displays for watercraft navigation systems.

Similarly, the crew on the bridge of a ship typically have different information sources. For example, the people on the bridge have a real-world view via windows in the bridge. Other examples of information sources for both the people on the bridge or in the Command information Center (CIC) are various screens showing input from for example radars, camera's, datalinks and management systems.

It is desirable to provide improved mechanisms for the combined presentation of these various sources of information in an improved manner.

### SUMMARY OF THE INVENTION

In accordance with the present invention in a first aspect there is provided a system for facilitating the coordination of entities in a volume with respect to a first designated reference point in a naval vessel. The system comprises a data coordinator configured to receive a plurality of data flows describing a part of the volume, the plurality of data flows comprising at least one or more positioning signals designating a location of one or more said entities, and one or more video signals and an orientation signal comprising data representing an orientation in a horizontal plane with respect to said first designated reference point. The coordinator is further configured to determine a first image representing a virtual space, the first image incorporating a view of the volume corresponding to a view from said first designated reference point aligned with said orientation and having a defined viewing angle in at least a yaw axis, compiled from said one or more video signals, said view of said volume comprising a radial projection of the volume in the virtual space, and
a representation of each entity falling within a sector radiating from the first designated reference point in alignment with the orientation and subtending said defined viewing angle. The representation taking the form of a respective indicator for each entity falling within the sector situated in a top-down projection of said volume in the virtual space, with the position of each respective indicator corresponding to the position of said respective entity in said projection of said volume as specified by one or more said positioning signals and wherein the respective radius joining the reference point and each said indicator intersects a vertical line corresponding to the same angle in the radial view such that the lateral angular displacement of each entity in said view of said volume corresponds to the lateral angular displacement of the indicator corresponding to that entity in said representation.

In accordance with a development of the first aspect, the radial projection corresponds to a projection on a section of a wall of a cylinder or sphere.

In accordance with a development of the first aspect, the radial projection is situated above said top-down projection in the virtual space.

In accordance with a development of the first aspect, the system comprises one or more display elements in fixed relation to a user's head and/or gaze.

In accordance with a development of the first aspect, the system further comprises a user attention detection system, and wherein said orientation signal is output by said user attention detection system as a function of the direction of a user's head and/or gaze.

In accordance with a development of the first aspect, the user attention detection system and the one or more display elements are incorporated in a handheld unit formed to be manually positioned with respect to a user's eyes.

In accordance with a development of the first aspect, the user attention detection system and said one or more display elements are incorporated in a display headset, helmet or goggles unit.

In accordance with a development of the first aspect, the data coordinator is coupled to a communications interface for transmitting said image and receiving said orientation signal.

In accordance with a development of the first aspect, the image is continually updated in real time based on the content of said data flows said orientation signal.

In accordance with a development of the first aspect, there is determined a second said image, said second image corresponding to said first image, calculated with respect to a second designated reference point, so as to provide a stereoscopic image viewable by a user as presenting a view of said volume in three dimensions.

In accordance with a development of the first aspect, the one or more positioning signals comprise or reflect one or more radar signals and/or one or more link signals. In accordance with a development of the first aspect, the data coordinator is further configured to access a data source to retrieve further data concerning said volume, and to incorporate said further data into said image.

In accordance with a development of the first aspect, the further data comprises map data, bearing data, entity identity data, speed data, range data, altitude data or software interface icons.

In accordance with a development of the first aspect, the further data comprises a representation of a particular class of entity, and wherein said view may be modified to incorporate said representation in a position of an entity of said class of entity in said volume.

In accordance with a development of the first aspect, the further data comprises a representation of a landscape corresponding to the landscape of said volume, and wherein said view may be modified to incorporate said representation of said landscape in a corresponding orientation and scale in said volume.

In accordance with a development of the first aspect, the video signals are received from one or more video cameras.

In accordance with a development of the first aspect, at least one of said video cameras is in moveable relation with respect to said volume, and wherein said orientation defining said view further comprises a pitch and roll component, and wherein said orientation is adjusted in real time so as to mirror an instantaneous orientation of said video camera in moveable relation with respect to said volume.

In accordance with a development of the first aspect, one or more said video cameras are capable of rendering low light, passive infrared or active infrared input, and wherein said data coordinator is further configured to selectively incorporate said video signals in said first image as a function of the respective quality of each signal and/or on the basis of user input.

In accordance with a development of the first aspect, the orientation signal is further transmitted to one or more sensor systems generating respective said data flows so as to cause a re-alignment of said sensor systems with regard to said orientation signal In accordance with a development of the first aspect, the image is further distorted so as to apply a progressive degree of magnification inversely proportional to the distance in the image from a specified point therein.

In accordance with the present invention in a second aspect there is provided computer implemented method of facilitating the coordination of entities in a volume with respect to a first designated reference point in a naval vessel, said method comprising the steps of receiving a plurality of data flows describing a part of said volume, said plurality of data flows comprising at least one or more positioning signals designating a location of one or more said entities, and one or more video signals, and an orientation signal comprising data representing an orientation in a horizontal plane with respect to said first designated reference point,
determining a first image representing a virtual space, said first image incorporating: a view of said volume corresponding to a view from said first designated reference point aligned with said orientation and having a defined viewing angle in at least a yaw axis, compiled from said one or more video signals, said view of said volume comprising a radial projection of said volume in said virtual space, and a representation of each said entity falling within a sector radiating from said first designated reference point in alignment with said orientation and subtending said defined viewing angle, said representation taking the form of a respective indicator for each said entity falling within said sector situated in an top-down projection of said volume in said virtual space, with the position of each said respective indicator corresponding to the position of said respective entity in said projection of said volume as specified by one or more said positioning signals and wherein the respective radius joining the reference point and each said indicator intersects a vertical line corresponding to the same angle in the radial view such that the lateral angular displacement of each entity in said view of said volume corresponds to the lateral angular displacement of the indicator corresponding to that entity in said representation

### BRIEF DESCRIPTION OF THE DRAWINGS

The invention will be better understood and its various features and advantages will emerge from the following description of a number of exemplary embodiments provided for illustration purposes only and its appended figures in which:
- Figure 1: presents aspects of an implementation in accordance with embodiment;
- Figure 2: shows a system in accordance with an embodiment;
- Figure 3a: shows a view with respect to which certain further embodiments will be discussed;
- Figure 3b: shows a representation of the view of figure 3a in accordance with an embodiment;
- Figure 3c: shows a representation of the view of figure 3a in accordance with a further embodiment;
- Figure 4: presents an example of a distorted image in accordance with an embodiment;
- Figure 5: presents a method in accordance with an embodiment; and
- Figure 6: shows a generic computing system suitable for implementation of embodiments of the invention.

### Detailed Description

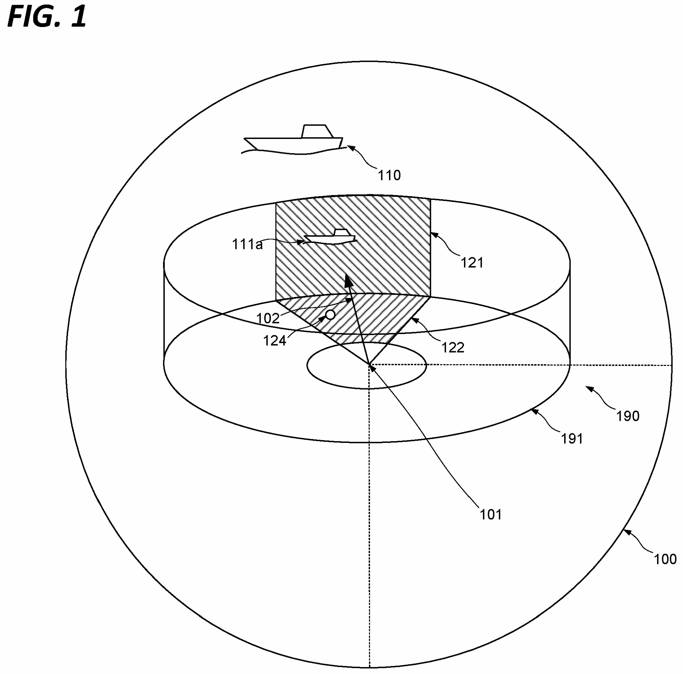

Figure 1 presents aspects of an implementation in accordance with embodiment.

In accordance with an embodiment, there is provided a system for facilitating the coordination of one or more entities (110) in a volume (100) with respect to a first designated reference point in a naval vessel such as a surface ship or submarine (101). Coordination in this sense may include monitoring entities for example. As shown, there is provided one entity 110 which by way of example is represented as a ship. The entity may be mobile or static object, tracked by external applications and given as an identified entity to the implementation or unidentified and simply represented as an orientation relative to the reference point (101), or a point in the volume relative to the reference point described by an orientation relative to the reference point (101). The reference point 101 may itself be defined with respect to a mobile entity such as any of those mentioned above, in which case the reference point may itself move in an absolute frame of reference over time. Alternatively, the reference point may be fixed, for example in the case of a dock or stationary vessel or similar permanent observation point. In any case, at least some of the entities 110 may be mobile with respect to the reference point. The volume 100 is defined with respect to the reference point. This volume corresponds to a certain volume of physical space around the reference point. As shown, the volume is spherical and centered on the reference point, however in other embodiments a volume of any size and shape may be defined. In particular the volume may be defined as comprising the space covered by the viewing range of all available visual sources, in which case the volume observed may rarely be spherical and may rather be defined by viewing angles, ranges and environment.

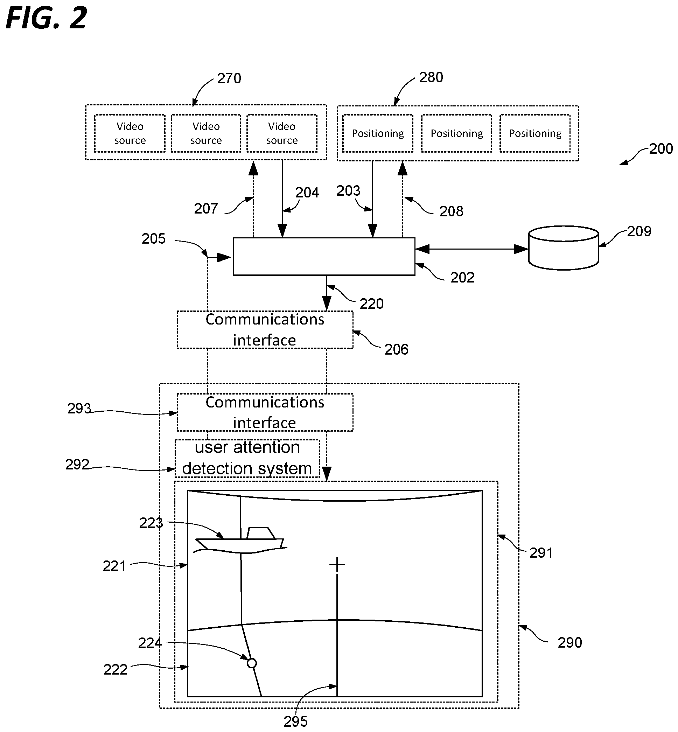

Figure 2 shows a system in accordance with an embodiment.

As shown in figure 2, there is provided a system 200 for facilitating the coordination of one or more entities in a volume, for example as discussed with reference to figure 1. The system comprises a data coordinator 202 configured to receive a plurality of data flows describing a part of said volume. Additionally the ratio of data representing entities such as positioning signals (203), and video signals(204) need not be 1:1. One video signal (204) may cover the range of multiple positioning signals(203) and entities that do not have available positioning data. An entity position may be out of range of video signals.'The plurality of data flows comprise at least one or more positioning signals 203 designating a location of one or more said entities, and one or more video signals 204, and an orientation signal 205 comprising data representing an orientation 102 in a horizontal plane 191, in both the volume 100 and a virtual space 190 with respect to said first designated reference point. In other words, each entity may presented doubly and in separate domains. This approach provides for a direct visual association between the two domains, improving the rapidity of assimilation of data by a user. As will be made clear in the following discussion, the orientation signal may also optionally incorporate information concerning orientation in other planes.

Referring back to figure 1 by way of example, the positioning signal 203 may specify the position of vessel 110 in volume 100, and the orientation signal may specify orientation 102, with respect to reference point 101.

As shown, positioning signals 203 are obtained from one or more Positioning Data sources 280, and video signals 204 are obtained from one or more Video Data sources 270.

By way of example, the one or more positioning signals 203 may comprise or reflect one or more radar, sonar or lidar signals, and/or one or more signals explicitly indicating an entity position such as a link signal, GPS data (which may have been extracted from radar, sonar, satellite image or lidar signals), Automatic Identification system (AIS), Automatic Dependent Surveillance Broadcast (ADSB), Identification Friend or Foe (IFF) system, and so on. The positioning signals may comprise any combination of such signals, and the data coordinator will function to generate a coherent combined representation of entities by aggregating this information with respect to the defined volume 100. In the case of positioning signals such as radar, sonar, lidar, satellite, AIS, ADSB or IFF signals, the data coordinator 202 may perform further processing to isolate entity positions with respect to the defined volume 100. As such, there may be provided one or more positioning systems 280.

In certain embodiments, some or all of the positioning systems may be capable of orientation (e.g. pan-tilt) and/or zoom operations. In such cases, the data coordinator may be adapted to issue instructions 208 to positioning systems to obtain the required data.

Indeed, in certain embodiments, the orientation signal itself may be transmitted to the one or more sensor systems generating respective said data flows so as to cause a re-alignment of said sensor systems with regard to said orientation signal.

By way of example, the video signals 204 may be received from one or more video cameras 270. For example, video sources may comprise digital video or still cameras, which may preferably be disposed around the reference point in real space. For example, if the reference point is situated in a mobile entity such as a vessel, or a fixed entity such as a control or observation tower, as discussed above, the video cameras may be distributed around the periphery of the entity in question, so that to some degree it is possible for the data coordinator 202 to derive an image corresponding to the orientation signal, whatever that may be. It will be appreciated that in large and complex entities, as corresponding large number of video cameras may be required, whose fields of view as well as other characteristics such as light sensitivity, optical distortions and the like may be heterogeneous. The data coordinator 202 may be adapted to process these diverse sources so as to obtain a coherent, homogenous representation of the view from the reference point in any direction. It may be expected in certain cases that the array of video cameras is incomplete, so that that the data for a view in a particular orientation is incomplete or partially obscured. The data coordinator may be adapted to synthetically fill in gaps in the data, or overwrite distracting obstacles, for example using artificial intelligence, processed abstract data etc. Data which is initially available in a top-down or plan view may be converted to a radial projection for inclusion in the radial projection. This may be used as a means of enriching the radial projection on the basis of available data regardless of its original format, or for presenting the full content of the top down data, even when this relates to parts of the volume outside the displayed projection.

Such substitute data may be subject to a colour filter or the like so that the user may visually distinguish from true original data.

Data may be received from additional sources which may not be compatible with representation in view 221 or 222, for example due to a lack of suitable positioning or other context information. Such data may nevertheless be incorporated in image 220 for example by representation in a "picture in picture" mode, as a "virtual monitor" apparent in the virtual space as discussed below, or otherwise.

In certain embodiments, some or all of the video cameras may be capable of orientation (e.g. pan-tilt,) and/or zoom operations. In such cases, the data coordinator may be adapted to issue instructions 207 to respective video cameras to obtain the required data.

In some embodiments, where a video camera 270 is capable of orientation (e.g. pan-tilt,) and/or zoom operations, the orientation signal 205 defining the view may further comprise a pitch/inclination and/or roll component, and the orientation of the video camera may be adjusted in real time so as to mirror this orientation signal 205 in moveable relation with respect to said volume. In this case, it may be possible to achieve an all-round view based on a single, or reduced number of video cameras, as compared to an aggregation from many fixed cameras.

Indeed, in certain embodiments, the orientation signal itself may be transmitted to the video camera so as to cause a re-alignment of said video camera(s) with regard to the orientation signal The camera may be controlled by passing the orientation to the camera, i.e without any need for a physical association between the camera and the user.

In certain embodiments, one or more said video cameras may be capable of rendering low light, passive infrared or active infrared input (possible covering the some or all of the same orientations as cameras intended for daylight use). The data coordinator may be further configured to selectively incorporate video signals from these alternative video cameras in the first image as a function of the respective quality of each signal and/or on the basis of user input, timing and/or location information, a determination of external light intensity, weather conditions and so forth. Accordingly, the system may automatically choose the inputs offering the best view for the time of day and general visual conditions. For example, at night the system may automatically select low light or infra-red video where available. Insofar as the input from these alternative sources and cameras intended for daylight use is visually different, the data coordinator may be configured to adjust the visual characteristics to homogenize the appearance across sources, for example using artificial intelligence and other graphical processing techniques.

In accordance with the embodiment, the coordinator is further configured to determine a first image 220 representing a virtual space, said first image incorporating a view 221 of the volume corresponding to a view from said first designated reference point aligned with said orientation and having a defined viewing angle in at least a yaw axis, constituting a radial projection 121 of the volume in the virtual space, and compiled from said one or more video signals. In other words, the radial projection may comprise a projection in radial direction on a surface that may approximate a vertical orientation over at least part of the surface, which may have the shape of a cylinder, dome, sphere, etc.

This radial projection 121 might be seen as constituting a panoramic or side view of the volume, in the direction of the orientation signal.

Accordingly, in the example of figure 1 the first image incorporates a view 121 of the volume corresponding to a view from said first designated reference point 101 aligned with the orientation 102 and having a defined viewing angle in at least a yaw axis, constituting a radial projection of the volume 100 in the virtual space, and compiled from the one or more video signals. Accordingly, the entity 110 is visible as 111a.

The image may preferably be continually updated in real time based on the content of said data flows said orientation signal.

In accordance with the embodiment, the first image further comprises a representation of each said entity falling within a sector radiating from said first designated reference point in alignment with said orientation and subtending said defined viewing angle. The representation takes the form of a respective indicator for each said entity falling within said sector situated in a top-down projection of said volume in said virtual space, with the position of each said respective indicator corresponding to the position of said respective entity in said projection of said volume as specified by one or more said positioning signals. This top-down projection might be seen as constituting an aerial or plan view of the volume, centered on said reference point, in particular where height position information is retained.

Accordingly, in the example of figure 1 the image further comprises a representation 124 of each said entity falling within a sector 122 radiating from said first designated reference point 101 in alignment with said orientation 102 and subtending said defined viewing angle. The representation takes the form of a respective indicator 124 for each said entity falling within the sector situated in a top-down projection of the volume in the virtual space 190, with the position of each respective indicator corresponding to the position of said respective entity in said projection of said volume as specified by one or more said positioning signals. This top-down projection might be seen as constituting an aerial or plan view of the volume, centered on said reference point, in particular where height position information is retained..

As such, there is compiled a hybrid representation of the same volume comprising both a top-down view and a radial view, with the radial view being defined by an orientation from a reference point in the volume, and the top-down view being centered on the same volume.

The image 220 as presented in figure 2 shows a hybrid representation as may be obtained on the basis of the dispositions of figure 1. Specifically, a vessel 223 is visible in partial image 221, and a marker 224 constituting a representation of the position of the same vessel in a top down view of the same space is presented in partial image 222. The orientation 102 is represented by a central axis terminating at a central focal point, although no such representation needs necessarily be provided. The center focal point may be steered by the gaze, and may comprise a cursor/pointer used in combination with the buttons/touchpad for example as described hereafter.

As shown the angular displacement of the entity 223 with respect to the central axis 295 providing an index of the orientation 102, corresponds to the angle of the radius joining the reference point (which is not within the area defined by the image 220 in the top down view 222) and a vertical line in the radial view 221, thereby implicitly associating the two different representations of the same entity. This implicit association does not exclude the possibility in certain embodiments of additionally establishing an explicit relationship, e.g. by means of reference symbols, colours, graphical associations such as a joining line, etc. This may preferably limit adding clutter to the video feed. Preferably, no visual objects are applied to the video image to this end.

The system may optionally additionally comprise one or more display devices 290 for receiving and displaying the image 220 generated by the data coordinator 202.

The system may optionally additionally comprise a communications interface 206 coupled to said data coordinator 202, for transmitting the image and receiving the orientation signal. The communications interface may support wired and/or wireless communications, and different communications modes may be used for transmitting the image and receiving the orientation signal. In some embodiments (not shown), the communications interface may additionally or alternatively handle the incoming positioning signals 203 and/or video signals 204. A further communications interface 293 may correspondingly be provided in a viewing unit 290, which may also incorporate one or more display elements 291 for the presentation of the image 220, and optionally the user attention detection system 292 which may output the orientation signal 205 as discussed above. Insofar as the attention detection system 292 and display elements 291 are provided in a discrete viewing unit 290, their respective signals may pass to and from the data coordinator 202 via a single communications interface 293.

In certain embodiments, the radial projection may correspond to a projection on a section of a wall of a cylinder or sphere.

Similarly, the top-down projection may correspond to a table projection. Entities that are displayed on the top-down projection may be represented with a horizontal displacement in the volume representing their altitude data.

In particular, as shown in figure 2, the radial projection is situated above the top-down projection in the virtual space. In other embodiments, the radial projection may be situated below the top-down projection in said virtual space - in this regard, it may be borne in mind that the terms "up" and "down" are merely relative, so that depending on the chosen point of view, a top-down view may be seen as bottom-up, and vice versa.

It will be appreciated that a viewer observing the hybrid image described with reference to figure 2 will perceive the image as a representation of their own viewpoint. It will be appreciated that this will be the case whether or not the viewer's actual location corresponds to that of the reference point. As such, in some cases the image may be presented to a remote viewer. For example, a pilot of a drone or other remotely controlled vessel may be presented with such a view. In this case also, the virtual world(191) orientation in the yaw axis relative to the volume(100) is preferably aligned with the orientation of the reference point (101) relative to the volume(100).

By combining heterogeneous representations of a same space in a hybrid view, where entities are implicitly linked by their angular position with respect to a viewer, it is possible to provide an enriched representation of a space, in which the viewer can intuitively and rapidly situate many entities in space with respect to each other, and with respect to a reference point, which may or may not correspond to a vessel operated by the user, and with respect to the general surroundings. This facilitates the coordination of entities in the volume in question.

In certain embodiments, the data coordinator is further configured to access a data source 209 to retrieve further data concerning the volume 100, and to incorporate said further data into said image. This further data may comprise map data, bearing data, entity identity data, speed data, range data, altitude data or software interface icons. The data source may comprise many sub sources. The data source may comprise the internet/world wide web, and/or any number of specialized data sources, which may be directly incorporated in the system 200, or accessed via suitable network or other communication structures.

For example, the data coordinator 202 may extract data from the data source to identify additional entities within the designated volume not apparent in the available positioning signals 203, and add additional entities to the first image, for example in the top-down view, locating these entities.

Additionally, or alternatively, the data coordinator 202 may extract data from the data source to enrich the available information for entities within the designated volume and add additional entities to the first image, for example in the top-down view, locating these entities. For example, the positioning signals 203 may enable the isolation of an entity (say an aircraft) at a particular position. The data coordinator 202 might then query Air Traffic Control to retrieve additional data concerning the aircraft located in the determined position).

The further data may comprise a representation of a particular class of entity, and the view may be modified to incorporate said representation in a position of an entity of said class of entity in said volume. For example, if an Airbus a320 aircraft is known to be in a particular position in the defined volume, a graphical representation of an Airbus a320 may be incorporated into the image 220 on this basis. This representation may be based on a bank of three dimensional representations of the known entity classes, and the representation as incorporated in the image 220 may be derived from this model on the basis of the position in the image (for example to determine a suitable scale), and the orientation of the entity in the volume insofar as this is known, or may be derived. Preferably, data is presented without interpretation, and without any attempt to prediction or identify "navigational hazards" or the like. This approach thus enables the user to obtain an understanding of the special relationship of entities including those that are invisible to the naked eye. For example this representation may be incorporated into the top down view 222. For example, a generic "blip" or position indicator may be replaced with a miniature representation of the object itself, so as to help the user immediately grasp the nature of each entity.

Additionally or alternatively, the further data may comprise a representation of a landscape corresponding to the landscape of the volume, and wherein said view may be modified to incorporate said representation of said representation in a corresponding orientation and scale in said volume. This representation may be incorporated into the radial view 221. Although ordinarily the landscape may be expected to be visible in the corresponding video data 204, this may not be the case for example in low visibility or night time scenarios, in which case the view 221 becomes an enhanced, synthetic view. This approach thus enables the user to obtain an understanding of the special relationship of entities to the surroundings including those that are invisible to the naked eye. For example, this representation may be incorporated into the top down view 222. The "table" presented in this view may be deformed on the basis of altitude data so as to represent the hills and valleys defining the landscape in which the markers derived from the positioning signals 203 are situated. This information may help the viewer interpret the radial view, for example in understanding why an entity present on the top down view is not visible in the radial view, e.g. as being obscured by the intervening landscape features.

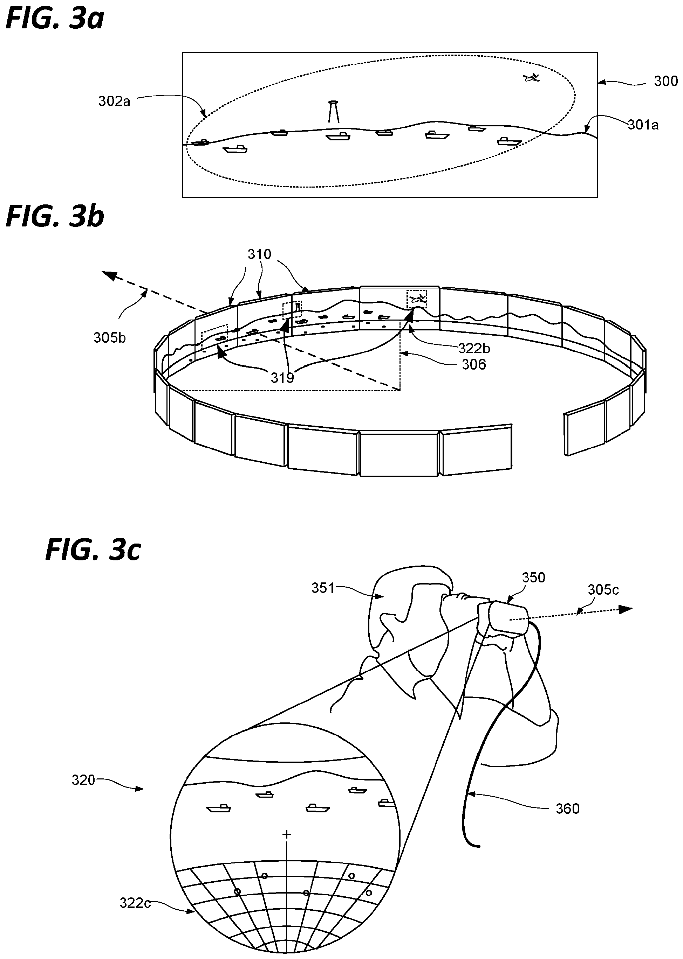

Figure 3a shows a view with respect to which certain further embodiments will be discussed.

Figure 3a shows in particular a representation of a view as may be seen through a window 300 of a vessel near a busy coastline 301a, with numerous other entities 302a between the subject vessel and the shore.

Figure 3b shows a representation of the view of figure 3a in accordance with an embodiment.

In certain embodiments, the system of may comprise a user attention detection system 292. In such embodiments, the orientation signal may be output by said user attention detection system as a function of the direction of a user's head and/or gaze.

On this basis, an embodiment such as shown in figure 3 may comprise the one or more displays constituting an array of displays 300 occupying a full circle or part of a circle, for disposal around a user (not shown), who may be assumed to take a position at or near the center of the circle. The user attention detection system may determine the direction of a user's head and/or gaze 305b within the circle of displays, and determine the orientation signal as a function of this direction. One or more of the displays in the determined direction may then be controlled to display the hybrid image as determined above.

On this basis, as shown the same entities visible in figure 3a are shown distributed across certain of the screens 310 (e.g. those considered to fall within a user's field of view 306), in the same distribution as in figure 3a, on the basis of the approaches described above for example with reference to figures 1 and 2. In this representation, the top down section of the hybrid image may appear as a band 322b stretching around the displays at a substantially constant height. As discussed above, the image feed is preferably kept clean (without adding any text, lables,synthetic enitities etc., so that it can be used for active monitoring of everything including small things, like an incident happening on one of the entities, is never accidentally covered by a tag or label.

Certain regions 319 are represented with a hashed outline, schematically representing the derivation of these parts of the image from different sources, respectively, in line with the foregoing embodiments.

Figure 3c shows a representation of the view of figure 3a in accordance with a further embodiment.

In certain embodiments, the one or more display elements may be in fixed relation to a user's head and/or gaze. Such display elements might for example be incorporated in a helmet, headset or set of goggles worn by a user, or a pair of "virtual binoculars" 350 as shown in figure 3c which the user 351 may manually and temporarily bring to his eyes. In this last case, the system may be considered to be in fixed relation to the user's head or gaze while held in position. In such a case, the one or more display elements may comprise two display elements, with the data coordinator as described above producing two variants of the image calculated to constitute a stereoscopic rendering of the hybrid image 320 when displayed together in a suitably dimensioned helmet, headset, set of goggles or virtual binoculars. Accordingly, the system may determine a second image corresponding to the first image, calculated with respect to a second designated reference point, so as to provide a stereoscopic image viewable by a user as presenting a view of said volume in three dimensions, with the first reference point approximating the position of one eye of a user, and the second reference point approximating the position of the other eye of that user.

In certain embodiments, further camera units may be mounted on a helmet, headset, set of goggles or virtual binoculars, to provide an additional source of images, which may belong to video signal 204, to see the normal world inside the headset.

Figure 3c presents the hybrid image 320 as perceived by the user, on the basis of a binocular viewing of a stereoscopic image. In an intuitive continuation of the binocular analogy, this is presented as a circle, although any other form may be generated as convenient.

This approach will bring the further benefit of recruiting a user's capacity for depth perception to achieve further improved grasp of the spatial relationship of displayed entities.

In such embodiments, a user attention detection system as described above may be integrated in the same object, as represented by the optional feature grouping unit 290 in figure 2.

On this basis the orientation of the unit 350 in space may be determined and taken to implicitly indicate the orientation of the user's head and gaze, and the orientation signal determined as a function of this direction. The display or display in helmet, headset, goggles or virtual binocular unit may then be controlled to display the hybrid image as determined above.

In any of the described embodiments, the user attention detection system 292 may comprise a system for determining the orientation of the unit in space, for example using a digital compass, gyroscope, or accelerometer based system.

As shown, a cable 360 connects the virtual binoculars to the data coordinator as described above (not shown), so as to convey the image data to the displays, and the orientation signal, representing orientation 305c from the virtual binoculars to the data coordinator. As stated above, other embodiments may use a wireless communication method.

The user attention detection system may determine the direction of a user's head and/or gaze 305c within the circle of displays, and determine the orientation signal as a function of this direction. One or more of the displays in the determined direction may then be controlled to display the hybrid image as determined above.

On this basis, as shown the same vessels visible in figure 3a, or a determined subset thereof are shown on the display of the virtual binoculars 350 (e.g. those considered to fall within a user's field of view, in the same distribution as in figure 3a, on the basis of the approaches described above for example with reference to figures 1 and 2. In this representation, the top down section of the hybrid image may appear as a band 322c stretching around the displays at a substantially constant height.

Accordingly, in accordance with certain embodiments the system provides a representation of a physical space combining a video view of a given scene in that space with a top down projection of the same space, where the position of entities appearing in the scene are market in the top down projection, such that the lateral angular displacement of each entity in the scene corresponds to the lateral angular displacement the marker corresponding to that entity in the top down projection, and the radial distance of each marker from an index indicates the range of each entity from a reference point in the physical space. The video view may be obtained for example from an array of video cameras arranged around the reference point in physical space, and the range and bearing representation on the top-down view may be obtained from a radar, lidar, sonar array, satellite image, AIS, ADSB, IFF etc. The representation may be presented to a user using a video headset or the like, which may also incorporate a direction detection system, whose output may determine the orientation of the displayed scene in the physical space.

The helmet/ headset / set of goggles or virtual binoculars unit may be provided with a zoom function, whereby the field of view may be expanded or compressed based on user input.

Either of the approaches described above with respect to figure 3b or 3c may achieve a virtual reality effect from the perspective of the user, such that the image he sees corresponds to the focus of his attention, as if he was directly viewing the world around him rather than a synthetic image, albeit enriched with the top-down projection which may appear as a circular "table" extending in all directions in front of him, upon which entity location markers are disposed in accordance with the preceding discussion.

By achieving this virtual reality effect, a user's ability to intuitively assimilate the spatial relationships of nearby entities is further extended to encompass awareness in all directions.

It will be appreciated that in the case of a system in a vessel, such a system may entirely replace or replicate the views achievable through the vessel's windows, or create a convincing simulation of a user being aboard the vessel even if they are not.

While the preceding embodiments generally follow the intuitive behavior of a virtual window or virtual binoculars, with a linear representation of spatial relationships, it will be appreciated that the recourse in accordance with the above described embodiments to a synthetic image opens the possibility of deliberately distorting the image. This may be done for example to emphasize entities of particular importance. In particular, this approach may make it possible to dedicate more display space to the focus of the user's attention within the image, whilst retaining a spatially compressed representation of the surrounding regions so as to maintain context and assure a continuous image with respect to peripheral regions.

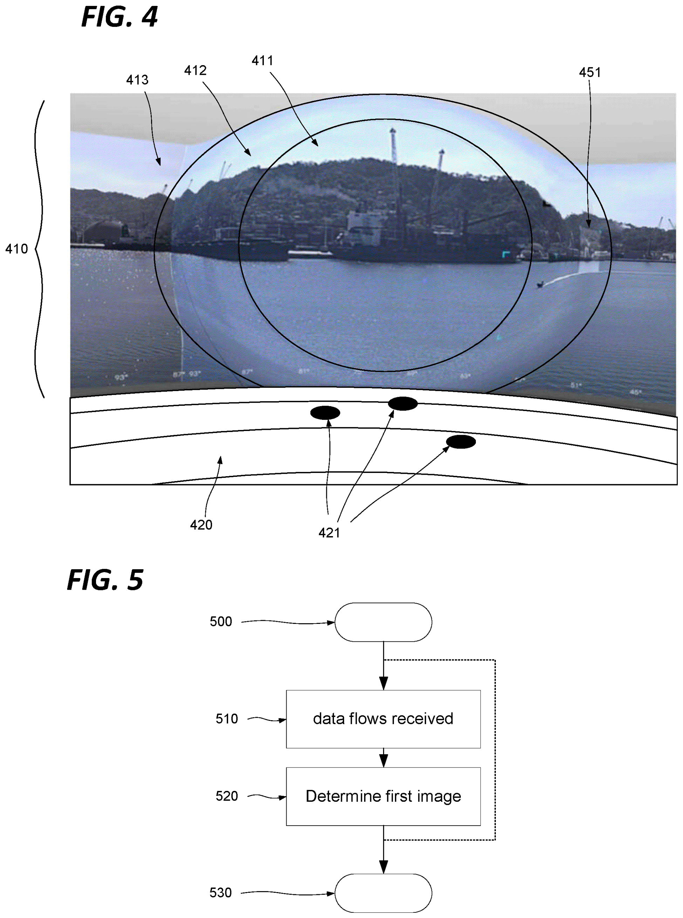

Figure 4 presents an example of a distorted image in accordance with an embodiment.

As shown, a central region 411 of a radial image 410 generated in accordance with the preceding embodiments is defined, in which the graphical content is magnified to a higher level than the peripheral portion 413 of the radial image. An intermediate region 412 is subjected to an optical distortion effect so as to maintain continuity between features visible in the central region 411 and the peripheral portion 413. As such, a part of the image may be further distorted so as to apply a progressive degree of magnification inversely proportional to the distance in the image from a specified point therein. This way, all of the video image remains visible while allowing part of the image to be magnified. It may be borne in mind that the portions 411, 412, 413 may be circular, elliptical, or any other convenient shape. The image 410 also presents a top down portion 420 incorporating markers 421. It may be noted that in accordance with certain embodiments presented above, as shown the markers are enriched, in this instance with identification data and motion vector indicators.

It may be noted that in accordance with certain embodiments presented above, the radial image 410 is also enriched, in this instance by the integration of additional image data 451 from alternative sources as discussed above.

It may be noted that the image presented in figure 4 is for illustration purposes only, and may present elements that are inconsistent or not to scale.

It will be appreciated that the distortion features discussed with respect to figure 4 may be associated in any combination with the features described elsewhere in the present description, for example as regards the presentation on one or more screens, in a helmet, headset, goggles, or virtual binocular unit, etc., or similarly as regards any type of data enrichment.

Figure 5 presents a method in accordance with an embodiment.

The method of figure 5 relates to a method of facilitating the coordination of entities in a volume with respect to a first designated reference point.

As shown, the method starts at step 500 before proceeding to step 510 at which a plurality of data flows describing a part of said volume are received. The data flows comprise at least one or more positioning signals designating a location of one or more said entities, and one or more video signals, and an orientation signal comprising data representing an orientation in a horizontal plane with respect to said first designated reference point.

The method then proceeds to step 520 at which a first image representing a virtual space is determined. This first image incorporates a view of the volume corresponding to a view from said first designated reference point aligned with the orientation and having a defined viewing angle in at least a yaw axis, compiled from said one or more video signals. The view of the volume comprises a radial projection of said volume in said virtual space, and a representation of each entity falling within a sector radiating from the first designated reference point in alignment with the orientation and subtending the defined viewing angle. The representation takes the form of a respective indicator for each entity falling within said sector situated in a top-down projection of said volume in said virtual space, with the position of each said respective indicator corresponding to the position of said respective entity in said projection of said volume as specified by one or more said positioning signals.

The method may terminate at step 530, or loop back to step 510. It will be appreciated that steps 510 and 520 may be performed asynchronously. Data elements mentioned with reference to step 510 may come available with various, and possibly unpredictable timings. The image generation step may process different parts of the image at different time, and may for example refresh parts as relevant data comes available

The method may be further extended to incorporate steps implementing any of the operations described above, for example with a view to displaying the image, adapting or enriching the image, issuing instructions to direct sensor systems, and so on. In case an orientation signal is missing or orientation signal tolerance is too large, template matching may be used to find the matching position on the panorama video.

It will be appreciated that many of the preceding embodiments may be at least partially implemented using a suitably configured computer system.

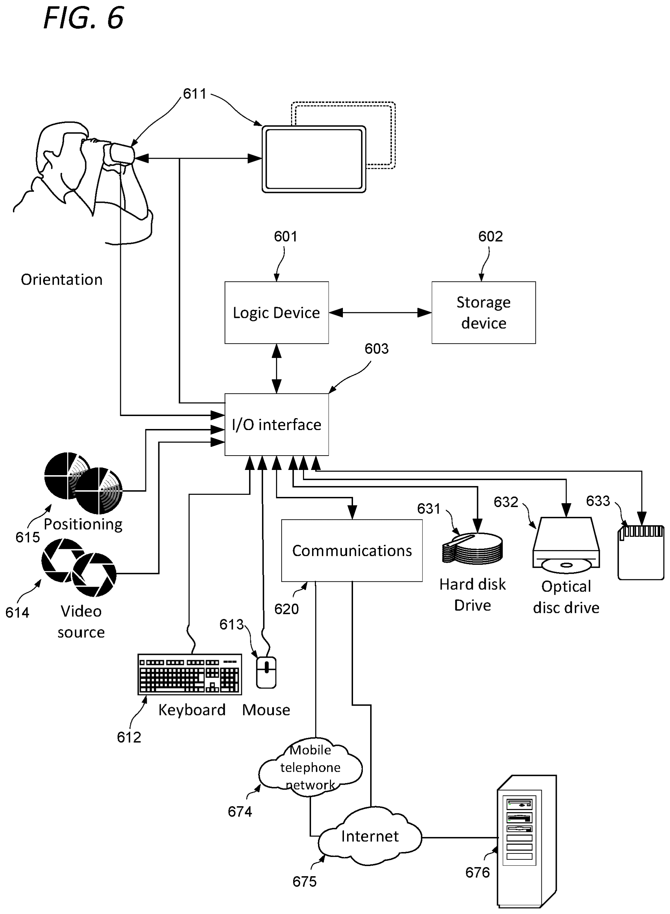

Figure 6 shows a generic computing system suitable for implementation of embodiments of the invention.

A shown in figure 6, a system includes a logic device 601 and a storage device 602. The system may include a display subsystem 611, corresponding for examples to the helmet, headset, goggles, virtual binocular unit or one or more displays described above, input/output subsystem 603, communication subsystem 620, and/or other components not shown.

Logic device 601 includes one or more physical devices configured to execute instructions. For example, the logic device 601 may be configured to execute instructions that are part of one or more applications, services, programs, routines, libraries, objects, components, data structures, or other logical constructs. Such instructions may be implemented to perform a task, implement a data type, transform the state of one or more components, achieve a technical effect, or otherwise arrive at a desired result.

The logic device 601 may include one or more processors configured to execute software instructions. Additionally or alternatively, the logic device may include one or more hardware or firmware logic devices configured to execute hardware or firmware instructions. Processors of the logic device may be single-core or multi-core, and the instructions executed thereon may be configured for sequential, parallel, and/or distributed processing. Individual components of the logic device 601 optionally may be distributed among two or more separate devices, which may be remotely located and/or configured for coordinated processing. Aspects of the logic device 601 may be virtualized and executed by remotely accessible, networked computing devices configured in a cloud-computing configuration.

Storage device 602 includes one or more physical devices configured to hold instructions executable by the logic device to implement the methods and processes described herein. When such methods and processes are implemented, the state of storage 602 device may be transformed-e.g., to hold different data.

Storage device 602 may include removable and/or built-in devices. Storage device may be locally or remotely stored (in a cloud for instance). Storage device 602 may comprise one or more types of storage device including optical memory (e.g., CD, DVD, HD-DVD, Blu-Ray Disc, etc.), semiconductor memory (e.g., FLASH, RAM, EPROM, EEPROM, etc.), and/or magnetic memory (e.g., hard-disk drive, floppy-disk drive, tape drive, MRAM, etc.), among others. Storage device may include volatile, non-volatile, dynamic, static, read/write, read-only, random-access, sequential-access, location-addressable, file-addressable, and/or content-addressable devices.

In certain arrangements, the system may comprise an interface 603 adapted to support communications between the logic device 601 and further system components. For example, additional system components may comprise removable and/or built-in extended storage devices. Extended storage devices may comprise one or more types of storage device including optical memory 632 (e.g., CD, DVD, HD-DVD, Blu-Ray Disc, etc.), semiconductor memory 633 (e.g., RAM, EPROM, EEPROM, FLASH etc.), and/or magnetic memory 631 (e.g., hard-disk drive, floppy-disk drive, tape drive, MRAM, etc.), among others. Such extended storage device may include volatile, non-volatile, dynamic, static, read/write, read-only, random-access, sequential-access, location-addressable, file-addressable, and/or content-addressable devices.

It will be appreciated that a storage device may include one or more physical devices, and excludes propagating signals per se. However, aspects of the instructions described herein alternatively may be propagated by a communication medium (e.g., an electromagnetic signal, an optical signal, etc.), as opposed to being stored on a storage device.

Aspects of logic device 601 and storage device 602 may be integrated together into one or more hardware-logic components. Such hardware-logic components may include field-programmable gate arrays (FPGAs), program- and application-specific integrated circuits (PASIC/ASICs), program- and application-specific standard products (PSSP/ASSPs), system-on-a-chip (SOC), and complex programmable logic devices (CPLDs), for example.

The term "program" may be used to describe an aspect of computing system implemented to perform a particular function. In some cases, a program may be instantiated via logic device executing machine-readable instructions held by storage device 602. It will be understood that different modules may be instantiated from the same application, service, code block, object, library, routine, API, function, etc. Likewise, the same program may be instantiated by different applications, services, code blocks, objects, routines, APIs, functions, etc. The term "program" may encompass individual or groups of executable files, data files, libraries, drivers, scripts, database records, etc.

In particular, the system of figure 6 may be used to implement embodiments of the invention.

For example a program implementing the steps described with respect to figure 5 or the algorithms presented above may be stored in storage device 602 and executed by logic device 601. Information reflecting or defining the defined volume, the reference point, the first and second images, the orientation of the user, the orientation of the video sources and or the positioning data sources, and/or the data from the video sources and or the positioning data sources and any other piece of data contributing to an implementation for example as described above may be stored in storage device 602, 631, 632, 633. Such Information may also or alternatively be received via the communications interface 620. User input defining the user orientation, the defined volume, a level of zoom, and any other piece of data contributing to an implementation for example as described above may be received via the I/O interface 603 and in particular a touchscreen display (which may also be display device 611), microphone (not shown), mouse 613, keyboard 612 or otherwise. It will be appreciated that different functionalities may be incorporated in a same physical device. For example, in embodiments using a headset as described above, the headset may also incorporate mouse/touchpad interface, loudspeakers, camera, microphone, etc. as known in the art. In particular, the I/O interface may receive data from video source 614, and/or from positioning data sources 615, for example as described with reference to the foregoing embodiments. The functions of any or all of the units 202 or 206 may similarly be implemented by a program performing the required functions, in communication with additional dedicated hardware units as necessary. The display 611 may display the graphical representation the first, and as the case may be second, image, as discussed above. Accordingly the invention may be embodied in the form of a computer program.

It will be appreciated that a "service", as used herein, is an application program executable across multiple user sessions. A service may be available to one or more system components, programs, and/or other services. In some implementations, a service may run on one or more server-computing devices.

Display subsystem 611 may be used to present a visual representation of data held by a storage device. This visual representation may take the form of a graphical user interface (GUI). As the herein described methods and processes change the data held by the storage device 602, and thus transform the state of the storage device 602, the state of display subsystem 611 may likewise be transformed to visually represent changes in the underlying data. Display subsystem 611 may include one or more display devices utilizing virtually any type of technology for example as discussed above. Such display devices may be combined with logic device and/or storage device in a shared enclosure, or such display devices may be peripheral display devices. An audio output such as speaker (not shown) may also be provided.

When included, input subsystem may comprise or interface with one or more user-input devices such as a keyboard 612, mouse 613, touch screen 611, or game controller (not shown). In some embodiments, the input subsystem may comprise or interface with selected natural user input (NUI) componentry. Such componentry may be integrated or peripheral, and the transduction and/or processing of input actions may be handled on- or off-board. Example NUI componentry may include a microphone (not shown) for speech and/or voice recognition; an infrared, colour, stereoscopic, and/or depth camera (not shown) for machine vision and/or gesture recognition; a head tracker, eye tracker, accelerometer, and/or gyroscope for motion detection and/or intent recognition; as well as electric-field sensing componentry for assessing brain activity. Any or all of these components may contribute to the determination of the user orientation signal as discussed above. The input/output interface 603 may similarly interface with a loudspeaker, vibromotor or any other transducer device as may occur to the skilled person (not shown). For example, the system may interface with a printer (not shown).

When included, communication subsystem 620 may be configured to communicatively couple computing system with one or more other computing devices. For example, communication module of communicatively couple computing device to remote service hosted for example on a remote server 676 via a network of any size including for example a personal area network, local area network, wide area network, or internet. Communication subsystem may include wired and/or wireless communication devices compatible with one or more different communication protocols. As non-limiting examples, the communication subsystem may be configured for communication via a wireless telephone network 674, or a wired or wireless local- or wide-area network. In some embodiments, the communication subsystem may allow computing system to send and/or receive messages to and/or from other devices via a network such as Internet 675. The communications subsystem may additionally support short range inductive communications with passive or active devices (NFC, RFID, UHF, etc.). In certain variants of the embodiments described above, the traffic data may be received via the telephone network 674 or Internet 675. Such communications functions may be used for example to retrieve additional data for the purposes of enriching the first image for example as discussed above.

The system of figure 6 is intended to reflect a broad range of different types of information handling system. It will be appreciated that many of the subsystems and features described with respect to figure 6 are not required for implementation of the invention, but are included to reflect possible systems in accordance with the present invention. It will be appreciated that system architectures vary widely, and the relationship between the different sub-systems of figure 6 is merely schematic, and is likely to vary in terms of layout and the distribution of roles in systems. It will be appreciated that, in practice, systems are likely to incorporate different subsets of the various features and subsystems described with respect to figure 6.

Examples of devices comprising at least some elements of the system described with reference to figure 6 and suitable for implementing embodiments of the invention include cellular telephone handsets including smart phones, vessel navigation systems, virtual reality headsets, and so forth.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The examples described above are given as non-limitative illustrations of embodiments of the invention. They do not in any way limit the scope of the invention which is defined by the following claims.

## Claims

1. A system (200) for facilitating the coordination of entities (110) in a volume (100) with respect to a first designated reference point in a naval vessel, (101), said system comprising a data coordinator (202), said data coordinator configured to receive a plurality of data flows describing a part of said volume, said plurality of data flows comprising at least one or more positioning signals (203) designating a location of one or more said entities, and one or more video signals (204), and an orientation signal (205) comprising data representing an orientation in a horizontal plane (191) with respect to said first designated reference point, said coordinator being further configured to determine a first image (220) representing a virtual space, said first image incorporating:
a view of said volume corresponding to a view from said first designated reference point aligned with said orientation and having a defined viewing angle in at least a yaw axis, compiled from said one or more video signals, said view of said volume comprising a radial projection (221) of said volume in said virtual space, and
a representation of each said entity falling within a sector radiating from said first designated reference point in alignment with said orientation and subtending said defined viewing angle, said representation taking the form of a respective indicator for each said entity falling within said sector situated in a top-down projection (222) of said volume in said virtual space, with the position of each said respective indicator corresponding to the position of said respective entity in said projection of said volume as specified by one or more said positioning signals and wherein the respective radius joining the reference point and each said indicator intersects a vertical line corresponding to the same angle in the radial view such that the lateral angular displacement of each entity in said view of said volume corresponds to the lateral angular displacement of the indicator corresponding to that entity in said representation.

2. The system of claims 1 wherein said system comprises one or more display elements in fixed relation to a user's head and/or gaze.

3. The system of any preceding claim wherein said system further comprises a user attention detection system, and wherein said orientation signal is output by said user attention detection system as a function of the direction of a user's head and/or gaze.

4. The system of claim 3 further comprising one or more display elements wherein said user attention detection system and said one or more display elements are incorporated in a handheld unit formed to be manually positioned with respect to a user's eyes.

5. The system of claim 3 further comprising one or more display elements wherein said user attention detection system and said one or more display elements are incorporated in a display headset, helmet or goggles unit.

6. The system of any preceding claim wherein said first image is continually updated in real time based on the content of said data flows and said orientation signal.

7. The system of any preceding claim wherein there is determined a second image, said second image corresponding to said first image, calculated with respect to a second designated reference point, so as to provide a stereoscopic image viewable by a user as presenting a view of said volume in three dimensions.

8. The system of any preceding claim wherein said one or more positioning signals (203) comprise or reflect one or more radar signals and/or one or more link signals.

9. The system of any preceding claim wherein said data coordinator is further configured to access a data source to retrieve further data concerning said volume, and to incorporate said further data into said first image.

10. The system of claim 9 wherein further data comprises map data, bearing data, entity identity data, speed data, range data, altitude data or software interface icons.

11. The system of claim 9 or 10 wherein further data comprises a representation of a particular class of entity, and wherein said view may be modified to incorporate said representation of the respective said particular class of entity in a position of an entity of said class of entity in said volume.

12. The system of claim 9 or 10 or 11 wherein further data comprises a representation of a landscape corresponding to the landscape of said volume, and wherein said view may be modified to incorporate said representation of a landscape in a corresponding orientation and scale in said volume.

13. The system of any preceding claim wherein said video signals (204) are received from one or more video cameras and wherein at least one of said video cameras is in moveable relation with respect to said volume, and wherein said orientation defining said view further comprises a pitch and roll component, and wherein said orientation is adjusted in real time so as to mirror an instantaneous orientation of said video camera in moveable relation with respect to said volume.

14. The system of any preceding claim wherein said image is further distorted so as to apply a progressive degree of magnification inversely proportional to the distance in the first image from a specified point therein.

15. A computer implemented method of facilitating the coordination of entities (110) in a volume (100) with respect to a first designated reference point in a naval vessel (101), said method comprising the steps of receiving a plurality of data flows describing a part of said volume, said plurality of data flows comprising at least one or more positioning signals (203) designating a location of one or more said entities, and one or more video signals (204), and an orientation signal (205) comprising data representing an orientation in a horizontal plane (191) with respect to said first designated reference point,
determining a first image (220) representing a virtual space, said first image incorporating:
a view of said volume corresponding to a view from said first designated reference point aligned with said orientation and having a defined viewing angle in at least a yaw axis, compiled from said one or more video signals, said view of said volume comprising a radial projection (221) of said volume in said virtual space, and
a representation of each said entity falling within a sector radiating from said first designated reference point in alignment with said orientation and subtending said defined viewing angle, said representation taking the form of a respective indicator for each said entity falling within said sector situated in an top-down projection (222) of said volume in said virtual space, with the position of each said respective indicator corresponding to the position of said respective entity in said projection of said volume as specified by one or more said positioning signals, and wherein the respective radius joining the reference point and each said indicator intersects a vertical line corresponding to the same angle in the radial view such that the lateral angular displacement of each entity in said view of said volume corresponds to the lateral angular displacement of the indicator corresponding to that entity in said representation.

## Patentansprüche

1. System (200) zum Erleichtern der Koordination von Entitäten (110) in einem Volumen (100) in Bezug auf einen ersten festgelegten Bezugspunkt in einem Schiff (101), wobei das System einen Datenkoordinator (202) umfasst, wobei der Datenkoordinator dafür konfiguriert ist, eine Vielzahl von Datenströmen zu empfangen, die einen Teil des Volumens beschreiben, wobei die Vielzahl von Datenströmen mindestens ein oder mehrere Positionierungssignale (203), die einen Standort einer oder mehrerer der Entitäten bezeichnen, und ein oder mehrere Videosignale (204) und ein Ausrichtungssignal (205), das Daten, die eine Ausrichtung in einer horizontalen Ebene (191) in Bezug auf den ersten festgelegten Bezugspunkt darstellen, umfasst, wobei der Koordinator weiter dafür konfiguriert ist, ein erstes Bild (220) zu bestimmen, das einen virtuellen Raum darstellt, wobei das erste Bild Folgendes enthält:
eine Ansicht des Volumens, die einer Ansicht von dem ersten festgelegten Bezugspunkt aus entspricht, mit der genannten Ausrichtung übereinstimmt und einen definierten Betrachtungswinkel in mindestens einer Gierachse aufweist, zusammengesetzt aus einem oder mehreren Videosignalen, wobei die Ansicht des Volumens eine radiale Projektion (221) des Volumens im virtuellen Raum umfasst, und
eine Darstellung jeder Entität, die in einen Sektor fällt, der von dem ersten festgelegten Bezugspunkt in Übereinstimmung mit der Ausrichtung fluchtet und den definierten Betrachtungswinkel aufspannt, wobei die Darstellung die Form eines jeweiligen Indikators für jede Entität annimmt, die in den Sektor fällt, der sich in einer Projektion (222) des Volumens von oben nach unten im virtuellen Raum befindet, wobei die Position jedes jeweiligen Indikators der Position der jeweiligen Entität in der Projektion des Volumens entspricht, wie sie durch ein oder mehrere Positionierungssignale vorgegeben ist, und wobei der jeweilige Radius, der den Bezugspunkt und jeden Indikator verbindet, eine vertikale Linie schneidet, die in der radialen Ansicht demselben Winkel entspricht, so dass die seitliche Winkelverschiebung jeder Entität in der Ansicht des Volumens der seitlichen Winkelverschiebung des dieser Entität entsprechenden Indikators in der Darstellung entspricht.

2. System nach Anspruch 1, wobei das System ein oder mehrere Anzeigeelemente in fester Beziehung zum Kopf und/oder Blick eines Benutzers umfasst.

3. System nach einem vorstehenden Anspruch, wobei das System weiter ein System zur Erkennung der Benutzeraufmerksamkeit umfasst und wobei das Ausrichtungssignal von dem System zur Erkennung der Benutzeraufmerksamkeit als eine Funktion der Kopf- und/oder Blickrichtung eines Benutzers ausgegeben wird.

4. System nach Anspruch 3, das weiter ein oder mehrere Anzeigeelemente umfasst, wobei das System zur Erkennung der Benutzeraufmerksamkeit und das eine oder die mehreren Anzeigeelemente in einer Handeinheit integriert sind, die dafür geformt ist, manuell in Bezug auf die Augen eines Benutzers positioniert zu werden.

5. System nach Anspruch 3, das weiter ein oder mehrere Anzeigeelemente umfasst, wobei das System zur Erkennung der Benutzeraufmerksamkeit und das eine oder die mehreren Anzeigeelemente in eine Anzeige-Headset-, Helm- oder Brilleneinheit integriert sind.

6. System nach einem vorstehenden Anspruch, wobei das erste Bild auf der Grundlage des Inhalts der Datenströme und des Ausrichtungssignals kontinuierlich in Echtzeit aktualisiert wird.

7. System nach einem vorstehenden Anspruch, wobei ein zweites Bild bestimmt wird, wobei das zweite Bild dem ersten Bild entspricht, berechnet in Bezug auf einen zweiten festgelegten Bezugspunkt, um so ein stereoskopisches Bild zu erzeugen, das von einem Benutzer als eine Ansicht des Volumens in drei Dimensionen betrachtet werden kann.

8. System nach einem vorstehenden Anspruch, wobei das eine oder die mehreren Positionierungssignale (203) ein oder mehrere Radarsignale und/oder ein oder mehrere Verbindungssignale umfassen oder reflektieren.

9. System nach einem vorstehenden Anspruch, wobei der Datenkoordinator weiter dafür konfiguriert ist, auf eine Datenquelle zuzugreifen, um weitere Daten bezüglich des Volumens abzurufen und die weiteren Daten in das erste Bild einzubinden.

10. System nach Anspruch 9, wobei die weiteren Daten Kartendaten, Peildaten, Entitätsidentitätsdaten, Geschwindigkeitsdaten, Entfernungsdaten, Höhendaten oder Software-Schnittstellensymbole umfassen.

11. System nach Anspruch 9 oder 10, wobei die weiteren Daten eine Darstellung einer bestimmten Entitätsklasse umfassen und wobei die Ansicht modifiziert werden kann, um die Darstellung der jeweiligen bestimmten Entitätsklasse an einer Position einer Entität der Entitätsklasse in dem Volumen einzubinden.

12. System nach Anspruch 9 oder 10 oder 11, wobei die weiteren Daten eine Darstellung einer Landschaft umfassen, die der Landschaft des Volumens entspricht, und wobei die Ansicht modifiziert werden kann, um die Darstellung einer Landschaft in einer entsprechenden Ausrichtung und einem entsprechenden Maßstab in dem genannten Volumen einzubinden.

13. System nach einem vorstehenden Anspruch, wobei die Videosignale (204) von einer oder mehreren Videokameras empfangen werden und wobei sich mindestens eine von den Videokameras in Bezug auf das Volumen in einer beweglichen Beziehung befindet, wobei die Ausrichtung, welche die Ansicht definiert, weiter eine Nick- und Rollkomponente umfasst und wobei die Ausrichtung in Echtzeit so angepasst wird, dass sie eine momentane Ausrichtung der Videokamera in einer in Bezug auf das Volumen beweglichen Beziehung widerspiegelt.

14. System nach einem vorstehenden Anspruch, wobei das Bild weiter verzerrt wird, um so einen progressiven Vergrößerungsgrad anzuwenden, der umgekehrt proportional zum Abstand im ersten Bild von einem bestimmten Punkt darin ist.

15. Computerimplementiertes Verfahren zum Erleichtern der Koordination von Entitäten (110) in einem Volumen (100) in Bezug auf einen ersten festgelegten Bezugspunkt in einem Schiff (101), wobei das Verfahren die folgenden Schritte umfasst: Empfangen einer Vielzahl von Datenströmen, die einen Teil des Volumens beschreiben, wobei die Vielzahl von Datenströmen mindestens ein oder mehrere Positionierungssignale (203), die einen Standort eines oder mehrerer der Entitäten bezeichnen, und ein oder mehrere Videosignale (204) und ein Ausrichtungssignal (205), das Daten umfasst, die eine Ausrichtung in einer horizontalen Ebene (191) in Bezug auf den ersten festgelegten Bezugspunkt darstellen, umfasst,
Bestimmen eines ersten Bildes (220), das einen virtuellen Raum darstellt, wobei das erste Bild Folgendes beinhaltet:
eine Ansicht des Volumens, die einer Ansicht von dem ersten festgelegten Bezugspunkt aus entspricht, mit der genannten Ausrichtung übereinstimmt und einen definierten Betrachtungswinkel in mindestens einer Gierachse aufweist, zusammengesetzt aus einem oder mehreren Videosignalen, wobei die Ansicht des Volumens eine radiale Projektion (221) des Volumens im virtuellen Raum umfasst, und
eine Darstellung jeder Entität, die in einen Sektor fällt, der von dem ersten festgelegten Bezugspunkt in Übereinstimmung mit der Ausrichtung fluchtet und den definierten Betrachtungswinkel aufspannt, wobei die Darstellung die Form eines jeweiligen Indikators für jede Entität annimmt, die in den Sektor fällt, der sich in einer Projektion (222) des Volumens von oben nach unten im virtuellen Raum befindet, wobei die Position jedes jeweiligen Indikators der Position der jeweiligen Entität in der Projektion des Volumens entspricht, wie sie durch ein oder mehrere Positionierungssignale vorgegeben ist, und wobei der jeweilige Radius, der den Bezugspunkt und jeden Indikator verbindet, eine vertikale Linie schneidet, die in der radialen Ansicht demselben Winkel entspricht, so dass die seitliche Winkelverschiebung jeder Entität in der Ansicht des Volumens der seitlichen Winkelverschiebung des dieser Entität entsprechenden Indikators in der Darstellung entspricht.

## Revendications

1. Système (200) destiné à faciliter la coordination d'entités (110) dans un volume (100) par rapport à un premier point de référence désigné dans un navire (101), ledit système comprenant un coordinateur de données (202), ledit coordinateur de données étant configuré pour recevoir une pluralité de flux de données décrivant une partie dudit volume, ladite pluralité de flux de données comprenant au moins un ou plusieurs signaux de positionnement (203) désignant l'emplacement d'une ou plusieurs desdites entités, et un ou plusieurs signaux vidéo (204) et un signal d'orientation (205) comprenant des données représentant une orientation dans un plan horizontal (191) par rapport audit premier point de référence désigné, ledit coordinateur étant en outre configuré pour déterminer une première image (220) représentant un espace virtuel, ladite première image intégrant :
une vue dudit volume correspondant à une vue depuis ledit premier point de référence désigné, aligné avec ladite orientation et présentant un angle de vue défini dans au moins un axe de lacet, compilée à partir dudit ou desdits signaux vidéo, ladite vue dudit volume comprenant une projection radiale (221) dudit volume dans ledit espace virtuel, et
une représentation de chaque dite entité se trouvant dans un secteur rayonnant à partir dudit premier point de référence désigné, aligné avec ladite orientation et sous-tendant ledit angle de vue défini, ladite représentation prenant la forme d'un indicateur respectif pour chaque dite entité se trouvant dans ledit secteur, situé dans une projection de haut en bas (222) dudit volume dans ledit espace virtuel, la position de chaque dit indicateur respectif correspondant à la position de ladite entité respective dans ladite projection dudit volume, telle que spécifiée par un ou plusieurs dits signaux de positionnement, et dans lequel le rayon respectif reliant le point de référence et chaque dit indicateur croise une ligne verticale correspondant au même angle dans la vue radiale, de sorte que le déplacement angulaire latéral de chaque entité dans ladite vue dudit volume corresponde au déplacement angulaire latéral de l'indicateur correspondant à cette entité dans ladite représentation.

2. Système selon la revendication 1, dans lequel ledit système comprend un ou plusieurs éléments d'affichage en relation fixe avec la tête et/ou le regard de l'utilisateur.

3. Système selon une quelconque revendication précédente, dans lequel ledit système comprend en outre un système de détection de l'attention de l'utilisateur, et dans lequel ledit signal d'orientation est émis par ledit système de détection de l'attention de l'utilisateur en fonction de la direction de la tête et/ou du regard de l'utilisateur.

4. Système selon la revendication 3, comprend en outre un ou plusieurs éléments d'affichage, dans lequel ledit système de détection de l'attention de l'utilisateur et ledit ou lesdits éléments d'affichage sont intégrés dans une unité portable formée pour être positionnée manuellement par rapport aux yeux de l'utilisateur.

5. Système selon la revendication 3, comprenant en outre un ou plusieurs éléments d'affichage, dans lequel ledit système de détection de l'attention de l'utilisateur et ledit ou lesdits éléments d'affichage sont intégrés dans un casque d'affichage, un casque ou des lunettes.

6. Système selon une quelconque revendication précédente, dans lequel ladite première image est continuellement mise à jour en temps réel en fonction du contenu desdits flux de données et dudit signal d'orientation.

7. Système selon une quelconque revendication précédente, dans lequel une seconde image est déterminée, ladite seconde image correspondant à ladite première image, calculée par rapport à un second point de référence désigné, de manière à fournir une image stéréoscopique visualisable par un utilisateur comme présentant une vue dudit volume en trois dimensions.

8. Système selon une quelconque revendication précédente, dans lequel ledit ou lesdits signaux de positionnement (203) comprennent ou reflètent un ou plusieurs signaux radar et/ou un ou plusieurs signaux de liaison.

9. Système selon une quelconque revendication précédente, dans lequel ledit coordinateur de données est en outre configuré pour accéder à une source de données afin de récupérer des données supplémentaires concernant ledit volume et d'intégrer lesdites données supplémentaires dans ladite première image.

10. Système selon la revendication 9, dans lequel les données supplémentaires comprennent des données cartographiques, des données d'orientation, des données d'identité d'entité, des données de vitesse, des données de distance, des données d'altitude ou des icônes d'interface logicielle.

11. Système selon la revendication 9 ou 10, dans lequel des données supplémentaires comprennent une représentation d'une classe particulière d'entité, et dans lequel ladite vue peut être modifiée pour intégrer ladite représentation de ladite classe particulière d'entité respective dans une position d'une entité de ladite classe d'entité dans ledit volume.

12. Système selon la revendication 9 ou 10 ou 11, dans lequel des données supplémentaires comprennent une représentation d'un paysage correspondant au paysage dudit volume, et dans lequel ladite vue peut être modifiée pour intégrer ladite représentation d'un paysage dans une orientation et une échelle correspondantes dans ledit volume.

13. Système selon une quelconque revendication précédente, dans lequel lesdits signaux vidéo (204) sont reçus depuis une ou plusieurs caméras vidéo et dans lequel au moins une desdites caméras vidéo est en relation mobile par rapport audit volume, et dans lequel ladite orientation définissant ladite vue comprend en outre une composante de tangage et de roulis, et dans lequel ladite orientation est ajustée en temps réel afin de refléter une orientation instantanée de ladite caméra vidéo en relation mobile par rapport audit volume.

14. Système selon une quelconque revendication précédente, dans lequel ladite image est encore déformée de manière à appliquer un degré de grossissement progressif inversement proportionnel à la distance dans la première image à partir d'un point spécifié dans celle-ci.

15. Procédé mis en œuvre par ordinateur pour faciliter la coordination d'entités (110) dans un volume (100) par rapport à un premier point de référence désigné dans un navire (101), ledit procédé comprenant les étapes de réception d'une pluralité de flux de données décrivant une partie dudit volume, ladite pluralité de flux de données comprenant au moins un ou plusieurs signaux de positionnement (203) désignant un emplacement de ladite ou desdites entités, et un ou plusieurs signaux vidéo (204), et un signal d'orientation (205) comprenant des données représentant une orientation dans un plan horizontal (191) par rapport audit premier point de référence désigné,
la détermination d'une première image (220) représentant un espace virtuel, ladite première image intégrant :
une vue dudit volume correspondant à une vue depuis ledit premier point de référence désigné aligné avec ladite orientation et présentant un angle de vue défini dans au moins un axe de lacet, compilée à partir dudit ou desdits signaux vidéo, ladite vue dudit volume comprenant une projection radiale (221) dudit volume dans ledit espace virtuel, et
une représentation de chaque dite entité se trouvant dans un secteur rayonnant à partir dudit premier point de référence désigné aligné avec ladite orientation et sous-tendant ledit angle de vue défini, ladite représentation prenant la forme d'un indicateur respectif pour chaque dite entité se trouvant dans ledit secteur, situé dans une projection de haut en bas (222) dudit volume dans ledit espace virtuel, la position de chaque dit indicateur respectif correspondant à la position de ladite entité respective dans ladite projection dudit volume, telle que spécifiée par ledit ou lesdits signaux de positionnement, et dans lequel le rayon respectif reliant le point de référence et chaque dit indicateur croise une ligne verticale correspondant au même angle dans la vue radiale, de sorte que le déplacement angulaire latéral de chaque entité dans ladite vue dudit volume corresponde au déplacement angulaire latéral de l'indicateur correspondant à cette entité dans ladite représentation.
